# EUROPÄISCHE PATENTSCHRIFT

(11) **EP 2 250 052 B1**
(45) Veröffentlichungstag und Bekanntmachung des Hinweises auf die Patenterteilung: **19.10.2011**
(21) Anmeldenummer: 09716032.9
(22) Anmeldetag: 02.03.2009
(51) Int. Cl.: B60R 21/215

(54) **HALTEMITTEL FÜR EINE AIRBAGANORDNUNG UND AIRBAGANORDNUNG**
RETENTION MEANS FOR AN AIRBAG ARRANGEMENT AND AIRBAG ARRANGEMENT
ELÉMENTS DE RETENUE POUR UN AGENCEMENT DE COUSSIN DE SÉCURITÉ GONFLABLE ET AGENCEMENT DE COUSSIN DE SÉCURITÉ GONFLABLE

(30) Priorität: 29.02.2008 EP 08075161
(43) Veröffentlichungstag der Anmeldung: 17.11.2010
(73) Patentinhaber: Faurecia Innenraum Systeme GmbH, 76767 Hagenbach (DE)
(72) Erfinder: KREPPOLD, Michael, 85301 Schweitenkirchen (DE); BRISTOW, Calvin, Simpsonville SC 29681 (US); PÜTZ, Tobias, 38527 Meine (DE)
(74) Vertreter: Pfenning, Meinig & Partner GbR
(86) Internationale Anmeldenummer: PCT/EP2009/001608
(87) Internationale Veröffentlichungsnummer: WO 2009/106370

(56) Entgegenhaltungen:
- DE-A1- 4 315 853
- DE-A1- 10 135 614
- DE-A1- 19 530 346
- DE-A1- 19 735 438
- DE-A1- 19 828 975
- DE-A1-102006 035 208
- FR-A- 2 902 728
- US-B1- 6 464 255

## Beschreibung

Gegenstand der vorliegenden Erfindung ist ein Haltemittel für eine Airbaganordnung nach dem Oberbegriff des Anspruchs 1 sowie eine Airbaganordnung mit einem Haltemittel.

Für gewöhnlich weisen Airbaganordnungen eine an einem Träger angeordnete Airbagklappe mit einem darunterliegenden Schusskanal auf, wobei sich im Schusskanal ein Airbag befindet. Beim Auslösen entfaltet sich dieser zunächst in der ihm durch den Schusskanal vorgegebenen Richtung und drückt auf die Airbagklappe, wobei die Airbagklappe geöffnet wird und sich der Airbag in den Fahrzeuginnenraum entfallen kann.

Bei der Öffnung der Airbagklappe übernehmen häufig so genannte Haltemittel eine Scharnierfunktion der Airbagklappe. Diese Haltemittel sind an der dem Fahrzeuginnenraum abgewandten Seite der Airbagklappe und am Träger oder im Schusskanal befestigt. Zumeist verlaufen die Haltemittel so, dass sie ein parallel zur Aufreißkante der Airbagklappe verlaufendes Scharnier bilden. Die Aufreißkante ist hierbei diejenige Kante, bei welcher der Airbag zumindest rein theoretisch zuerst hindurchtreten könnte.

Die Haltemittel weisen oftmals eine Überlänge auf, d. h. dass diese nicht nur eine Verbindung minimaler Länge zwischen der Airbagklappe und dem Träger oder Schusskanal bilden dürfen, sondern aufgrund der Dicke des Trägers bzw. der Airbagklappe einer Überlänge bedürfen, so dass die Airbagklappe zum Durchtritt des Airbags zumindest an drei Seiten vollständig geöffnet werden kann. Die vierte Seite ist hierbei diejenige Seite, entlang derer das Haltemittel verläuft.

Bei der Öffnung der Airbagklappe wirken große Zugkräfte auf die vorgenannten Haltemittel. Von daher müssen die Haltemittel mit großem Aufwand an der Airbagklappe bzw. dem Träger oder im Schusskanal befestigt werden, so dass sie sich nicht von diesem lösen können. Wäre die Verbindung zwischen dem Haltemittel und der Airbagklappe bzw. dem Träger oder dem Schusskanal nicht hinreichend gut, könnte sich das Haltemittel lösen, was zu einem unkontrollierten Öffnen der Airbagklappe führt, wodurch beispielsweise die Airbagklappe in den Fahrzeuginnenraum geschleudert wird oder eine ordnungsgemäße Entfaltung des Airbags verhindert wird. Die beiden vorgenannten Szenarien sind von daher unter allen Umständen zu vermeiden.

In der DE 101 35 614 A1 ist eine Airbaganordnung mit Haltemitteln gezeigt, wobei die Haltemittel am Träger bzw. an der Airbagklappe verklebt oder verschweißt sind. Zudem sind Dome vorhanden, an welchen die Haltemittel schraubartig befestigt werden können. Eine ähnliche Befestigung der Haltemittel ist aus der gattungsgemässen DE 195 30 346 A1 bekannt, wobei die Haltemittel in die Airbagklappe eingebettet sind und am Träger in Befestigungslaschen eingebettet sind, wobei die Befestigungslaschen mit dem Träger verschraubt sind. Beiden Anordnungen ist gemein, dass die Haltemittel lediglich einfach mit der Airbagklappe bzw. dem Träger oder dem Schusskanal verbunden sind. Hierdurch wird es bei hohen Zugkräften aufgrund der Öffnung der Airbagklappe möglich, dass sich das Haltemittel löst, da es keinen "Rückhalt" hat.

Aufgabe der vorliegenden Erfindung ist es, ein Haltemittel für eine Airbaganordnung zu schaffen bzw. eine Airbaganordnung mit einem Haltemittel zu schaffen, welches den vorgenannten Nachteil nicht aufweist.

Die Aufgabe wird gelöst durch ein Haltemittel für eine Airbaganordnung nach den Merkmalen des Anspruchs 1 sowie eine Airbaganordnung nach den nebengeordneten Ansprüchen. Vorteilhafte Weiterbildungen der Erfindung sind in den untergeordneten Ansprüchen offenbart.

Das Haltemittel für eine Airbaganordnung weist ein erstes Halteelement mit einem ersten und einem zweiten Endabschnitt auf, wobei zwischen dem ersten und zweiten Endabschnitt ein weiterer Abschnitt angeordnet ist. Der erste Endabschnitt ist mit einer Airbagklappe, der zweite Endabschnitt mit einem Schusskanal oder einem die Airbagklappe umgebenden Träger verbindbar. Der zweite Endabschnitt kann auch an einem anderen im Bereich des Schusskanals oder des Trägers angeordneten ortsfesten Gegenstand befestigbar oder befestigt sein. Diese Gegenstände sind ausdrücklich unter den Begriffen Träger und Schusskanal umfasst.

Am ersten Endabschnitt ist eine mit einer Airbagklappe verbindbare erste Platte angeordnet. Selbiges gilt für den zweiten Endabschnitt, welcher mit einer zweiten Platte verbunden ist, wobei die Platte im Schusskanal oder am Träger angeordnet werden kann. Hierbei ist zu beachten, dass lediglich eine der beiden ersten oder zweiten Platten vorhanden sein muss, jedoch auch beide vorhanden sein können.

Die Erfindung ist zudem weiter dadurch charakterisiert, dass der erste Endabschnitt mindestens zwei sich überlappende miteinander verbundene Endteilabschnitte aufweist, wobei sich die Endteilabschnitte gegenüberliegen und durch die erste Platte voneinander beabstandet sind. Des Weiteren sind sie mit der ersten Platte verbunden. Die gleiche Möglichkeit bietet sich für den zweiten Endabschnitt und seine Verbindung zu der zweiten Platte.

Durch die erfindungsgemäße "U"-förmige oder "J"-förmige Umwicklung der ersten und/oder zweiten Platte hintergreift das erste Halteelement mit einem oder beiden seiner Endabschnitte die erste und/oder zweite Platte, wodurch eine zusätzliche Sicherung gegen das Herausziehen des ersten Halteelements von der ersten bzw. zweiten Platte vermieden wird. Der erste und der zweite Endabschnitt sind folglich nicht länger nur an einer Seite der Platte befestigt, sondern werden vorzugsweise in Form einer Schlaufe um die erste bzw. zweite Platte gelegt, so dass bei einem Zug - beispielsweise durch das Auslösen des Airbags - das Haltemittel durch den Umkehrpunkt der Schlaufe zusätzlich auf der ersten Platte gehalten wird. Hierdurch wird es möglich, das Haltemittel für höhere Zugkräfte auszulegen. Des Weiteren ist es aufgrund des Vorhandenseins der ersten und/oder zweiten Platte möglich, das Haltemittel nachträglich an eine bereits fertig konzipierte Airbaganordnung nachzurüsten.

In einer Ausführungsform des Haltemittels sind die Endteilabschnitte des ersten Endabschnitts mit der ersten Platte und/oder die Endteilabschnitte des zweiten Endabschnitts mit der zweiten Platte zumindest teilweise stoffschlüssig verbunden. Hierdurch wird die Verbindung zwischen der ersten bzw. zweiten Platte und dem ersten bzw. zweiten Endteilabschnitt zusätzlich verstärkt, wodurch wiederum höhere Zugkräfte aufgenommen werden können.

In einer weiteren Ausführungsform sind die Endteilabschnitte des ersten Endabschnitts in die erste Platte und/oder die Endteilabschnitte des zweiten Endabschnitts in die zweite Platte zumindest teilweise eingelassen. Dies kann beispielsweise mittels eines Hinterspritzens oder Einspritzens der Endabschnitte bei der Herstellung der ersten bzw. zweiten Platte geschehen. Hierdurch wird zwischen dem Endabschnitt und der Platte eine besonders gute Verbindung mit hoher Zugfestigkeit hergestellt.

In einer weiteren Ausführungsform sind die mindestens zwei sich überlappenden Endteilbereiche des ersten Endabschnitts in einer Schlaufe mit einem Umkehrpunkt (Umkehrpunkt im Sinne eines Verbindungspunkts der beiden Schenkel eines "U" oder "J") geformt, wobei der Umkehrpunkt nicht mit der ersten Platte verbunden ist. Analog gilt selbiges für die sich überlappenden Endteilbereiche des zweiten Endabschnitts. Dadurch, dass der Teilabschnitt mit dem Umkehrpunkt nicht mit der ersten bzw. zweiten Platte verbunden ist, ist der Umkehrpunkt von außen sichtbar, und es kann eine visuelle Qualitätskontrolle vorgenommen werden, um zu überprüfen, ob der Endabschnitt sich über die gesamte Länge der Platte hinweg erstreckt. Die sichtbare Anordnung des Umkehrpunkts sorgt dafür, dass die Platten zur Qualitätskontrolle nicht stichprobenartig aufgeschnitten werden müssen. Dabei ist es besonders bevorzugt, wenn der erste Endabschnitt mit der ersten Platte und/oder der zweite Endabschnitt mit der zweiten Platte verklebt oder verschweißt oder verschraubt oder eingespritzt ist.

Vorzugsweise weist das erste Halteelement ein Gewebe oder eine Folie aus Polyester und/oder faserverstärktes Polyester und/oder ein Aramid auf- Auch Polyamid ist verwendbar. Insbesondere über die Verwendung des Aramids oder eines aramidverstärkten. Polyesters kann eine besonders hohe Zugfestigkeit und in Verbindung mit der "U"- oder "J"-förmigen Anordnung der Endteilabschnitte der ersten und zweiten Platte eine verbesserte Ausreißfestigkeit des Haltemittels erreicht werden.

Weiterhin ist es vorteilhaft, wenn die erste und/oder zweite Platte aus Polypropylen, vorzugsweise einem faserverstärkten Polypropylen wie beispielsweise PPLGF20 besteht bzw. dieses aufweist.

In einer Ausführungsform des ersten Halteelements sind die Endteilabschnitte des ersten und/oder zweiten Endabschnitts zwischen 0,5 und 15 cm, vorzugsweise zwischen 1,5 und 5 cm lang. Die Längen des ersten und zweiten Endabschnitts ergeben sich hieraus durch Verdoppelung. Die Länge des zwischen dem ersten und zweiten Endabschnitt liegenden Abschnitts beträgt zwischen 2 und 20 cm, vorzugsweise 4 bis 15 cm.

In einer Ausführungsform des Haltemittels weist der Abschnitt mindestens zwei sich überlappende Teilabschnitte auf, wobei mindestens ein zweites Halteelement eine Verbindung zwischen den mindestens zwei Teilabschnitten herstellt. Dabei besitzt das zweite Halteelement eine geringere Zugfestigkeit als das erste Halteelement. Dadurch, dass die mindestens zwei Teilabschnitte miteinander verbunden sind, wird die ursprünglich durch die gesamte Länge des Abschnitts definierte Überlänge verkürzt. Dabei wird die Verbindung zwischen den mindestens zwei Teilabschnitten vorteilhafterweise derart hergestellt, dass der sich zwischen dem ersten und zweiten Endabschnitt befindliche Abschnitt effektiv auf eine Länge reduziert wird, welche im Wesentlichen der direkten Verbindung zwischen dem an einem Träger oder im Schusskanal befestigten zweiten Endabschnitt des Haltemittels und dem an einer Airbagklappe befestigten ersten Endabschnitt entspricht. Auch kann diese effektive Anfangsüberlänge, welche die Länge des Abschnitts vom ersten Endabschnitt bis zur Verbindung und vom zweiten Endabschnitt bis zur Verbindung zusammen darstellt, unwesentlich länger als die direkte Verbindung sein. Die direkte Verbindung wird hierbei durch eine Gerade gebildet.

Das Haltemittel schränkt dann eine auf eine mit dem Haltemittel in Wirkverbindung stehende Achse der Airbagklappe wirkende Hubbelastung ein, wobei die Hubbelastung auf einer im Wesentlichen parallel zu dieser Achse gegenüberliegenden Achse der Airbagklappe unverändert bleibt, was zu einem direkten Einleiten der Drehbewegung der Airbagklappe führt. Nach dem Einleiten der Drehbewegung der Airbagklappe wird die durch den zwischen dem ersten und zweiten Endabschnitt angeordneten Abschnitt definierte Überlänge in ihrer gesamten Länge vonnöten, um eine vollständige Öffnung der Airbagklappe zu ermöglichen. Da das zweite Halteelement, mit welchem die Verbindung zwischen den mindestens zwei Teilabschnitten hergestellt wird, eine geringere Zugfestigkeit als das erste Halteelement aufweist, reißt die zwischen den mindestens zwei Teilabschnitten herrschende Verbindung aufgrund des Aufpressdrucks des Airbags auf, wodurch die gesamte durch den Abschnitt definierte Überlänge zur Verfügung steht. Die Überlänge steht jedoch erst dann zur Verfügung, nachdem die Drehbewegung der Airbagklappe bereits initiiert wurde. Der vorteil des erfindungsgemässen Haltemittels ist es, dass zunächst die Rotation der Airbagklappe eingeleitet wird und erst anschlieβend die Überlänge, welche aufgrund der Dicke des Trägers bzw. der Instrumententafel oder der Airbagklappe vonnöten ist, aufgrund des Aufreißens der Verbindung zur Verfügung steht. So wird eine Hubbelastung nahezu vermieden.

In einer weiteren Ausführungsform der Erfindung wird die Verbindung zwischen den mindestens zwei Teilabschnitten durch Verkleben, Verschweißten oder Vernähen hergestellt. Bei den vorgenannten Verbindungsmöglichkeiten können die zwei Teilabschnitte derart miteinander verbunden werden, dass erst ab einem vordefinierten aufgebrachten Zug auf die Verbindung diese Verbindung aufgelöst wird und die gesamte Überlänge zur Verfügung steht. Der zum Aufreißen der Verbindung notwendige Zug beträgt vorzugsweise 800 bis 2000 N, besonders vorzugsweise 1000 bis 1500 N. Dabei ist die Zugfestigkeit der Verbindung immer geringer als die Zugfestigkeit des ersten Halteelements, welches vorzugsweise größer als 5000N ist. Je nach verwendeter Verbindung kommen als zweites Halteelement beispielsweise Kleber für eine Verklebungsverbindung, Kunststoffe für eine Verschweißungsverbindung oder Garn oder Fasern für eine Vernähung, welche in Form einer Naht aufgebracht werden, in Betracht. Hierbei ist insbesondere die Verwendung von Garn und Fasern in Form einer Naht hervorzuheben, da diese besonders einfach eingebracht werden können.

In einer weiteren Ausführungsform des Haltemittels weist der zwischen dem ersten und dem zweiten Endabschnitt angeordnete Abschnitt drei sich überlappende Teilabschnitte auf, wobei das mindestens eine zweite Halteelement eine Verbindung zwischen den mindestens drei Teilabschnitten herstellt. Diese "S"-förmige Anordnung des Abschnitts des ersten Halteelements stellt eine topologisch besonders einfache Lösung dar. Bei der Verwendung dieser Lösung können sowohl zwei als auch die drei Teilabschnitte miteinander verbunden werden. Selbstverständlich können auch mehr sich überlappende Teilabschnitte verwendet werden. Gleiches gilt für die Verbindung durch das zweite Halteelement.

Die verschiedenen Ausführungsformen der Erfindung sind miteinander kombinierbar.

Das erfindungsgemäße Haltemittel bzw. dessen Ausführungsformen kommen in einer Airbaganordnung mit mindestens einer einen Schusskanal überdeckenden Airbagklappe mit einer einem Fahrzeuginnenraum zugewandten Sichtseite zum Einsatz. Das Haltemittel bildet hierbei entlang einer Seite der Airbagklappe ein Scharnier für dieses bzw. übernimmt eine Scharnierfunktion. Der erste Endabschnitt ist mit der mindestens einen Airbagklappe und der zweite Endabschnitt mit dem Schusskanal oder einem die Airbagklappe umgebenden Träger verbunden. Auf die Vorteilhaftigkeit einer derartigen Anordnung wurde bereits in den vorhergehenden Abschnitten eingegangen.

Alternativ hierzu kann das Haltemittel auch ohne eine erste und zweite Platte ausgeführt sein, wobei der erste Endabschnitt und die mindestens zwei sich überlappenden miteinander verbundenen Endteilabschnitte sich gegenüberliegen und voneinander beabstandet in die Airbagklappe eingelassen sind. Ebenfalls ist es möglich, die mindestens zwei sich überlappenden miteinander verbundenen Endteilabschnitte des zweiten Endabschnitts sich gegenüberliegend und voneinander beabstandet in den Schusskanal oder den Träger einzulassen. Hierdurch wird auf die erste und zweite Platte verzichtet, was zwar die Produktionskosten erhöht und die Nachrüstbarkeit schwieriger macht, jedoch in einer durch die Verankerung im Träger bzw. der Airbagklappe weiter verbesserten Zugfestigkeit des Haltemittels resultiert.

Im Folgenden soll die Erfindung anhand einiger Ausführungsbeispiele genauer erläutert werden. Es zeigen:
- Fig. 1a, b, c: Ausführungsformen eines Haltemittels;
- Fig. 2a,b: eine weitere Ausführungsform eines Haltemittels mit Verbindung;
- Fig. 3a,b: eine Ausführungsform eines Gewebes;
- Fig. 4a-d: die Wirkungsweise einer Ausführungs- form des Haltemittels in einer Airbag- anordnung;
- Fig. 5: eine alternative Anordnung des Halte- mittels in einer Airbaganordnung.

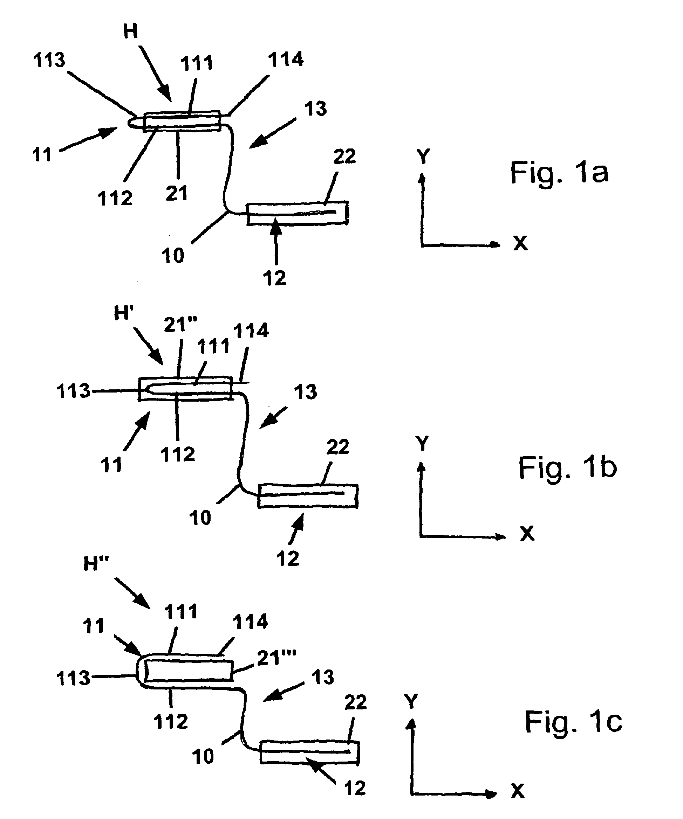

In der Fig. 1a wird eine erste Ausführungsform eines erfindungsgemäßen Haltemittels im Querschnitt dargestellt. Das Haltemittel H weist ein erstes Halteelement in Form eines Gewebes 10 mit einem ersten Endabschnitt 11 und einem zweiten Endabschnitt 12 sowie einem dazwischenliegenden Abschnitt 13 auf. Weiterhin weist das Haltemittel eine erste Platte 21 und eine zweite Platte 22 auf. Der erste Endabschnitt 11 weist zwei Endteilabschnitte 111 und 112 mit einem Umkehrpunkt 113 auf und ist "J"- bzw. "U"-förmig in der ersten Platte angeordnet. Dabei ist die Anordnung des ersten Endabschnitts 11 derart gewählt, dass der Umkehrpunkt 113 sich außerhalb der ersten Platte 21 befindet. Selbiges gilt für das Ende 114 des ersten Endabschnitts 11, welches auf der gegenüberliegenden Seite der ersten Platte 21 übersteht. Dadurch, dass sowohl der Umkehrpunkt 113 als auch das Ende 114 nicht innerhalb der ersten Platte 21 verlaufen, wird eine visuelle Qualitätskontrolle des Haltemittels H von außen möglich, ohne dass in der Produktion stichprobenartig die erste Platte 21 bzw. die zweite Platte 22 aufgeschnitten werden muss. Weiterhin ist zu beachten, dass der zweite Endabschnitt 12 zwar lediglich einfach innerhalb der zweiten Platte 22 angeordnet ist, jedoch auch "J"-förmig bzw. "U"-förmig mit Umkehrpunkt angeordnet sein kann.

In der Fig. 1b ist eine alternative Ausführungsform des Haltemittels dargestellt. Das Haltemittel H' weist ebenfalls das Gewebe 10 mit dem ersten Endabschnitt 11 und einem dem Endabschnitt 12 sowie dem dazwischenliegenden Abschnitt 13 auf, wobei die Endteilabschnitte 111 und 112 sowie der Umkehrpunkt 113 sich innerhalb der ersten Platte 21" befinden. Dies bedeutet, dass, gesetzt den Fall, dass die erste Platte 21" nicht durchsichtig ist, der Umkehrpunkt 113 für einen Betrachter nicht sichtbar ist. Lediglich das Ende 114 schaut aus der ersten Platte 21" heraus. Diese Ausführungsform kann bevorzugt sein, wenn das Gewebe 10 in ein Werkzeug eingelegt und anschließend umspritzt wird, wobei durch das Umspritzen die erste Platte 21" hergestellt wird.

Eine alternative Ausführungsform des Haltemittels ist in der Fig. 1c gezeigt. Das Haltemittel H'' zeichnet sich dadurch aus, dass der erste Endabschnitt 11 außen auf der ersten Platte 21"' "J"-förmig bzw. "U"-förmig angeordnet ist. Das bedeutet, dass die End-teilabschnitte 111 und 112 durch die gesamte Dicke in y-Richtung der Platte 21''' voneinander beabstandet sind und sich gegenüberliegen. Bei den vorherigen Ausführungsbeispielen der Fign. 1a und 1b sind die Endteilabschnitte 111 und 112 ebenfalls voneinander beabstandet, jedoch nicht über die gesamte Dicke der ersten Platte hinweg. Weiterhin ist in der Fig. 1c dargestellt, dass der Umkehrpunkt an der in x-Richtung betrachtet linken Seite der ersten Platte 21''' angeordnet ist. Im Gegensatz zu den vorhergehenden Fign. 1a und 1b ist der erste Endabschnitt 11 nicht an die erste Platte 21''' angespritzt, sondern lediglich mit dieser verklebt.

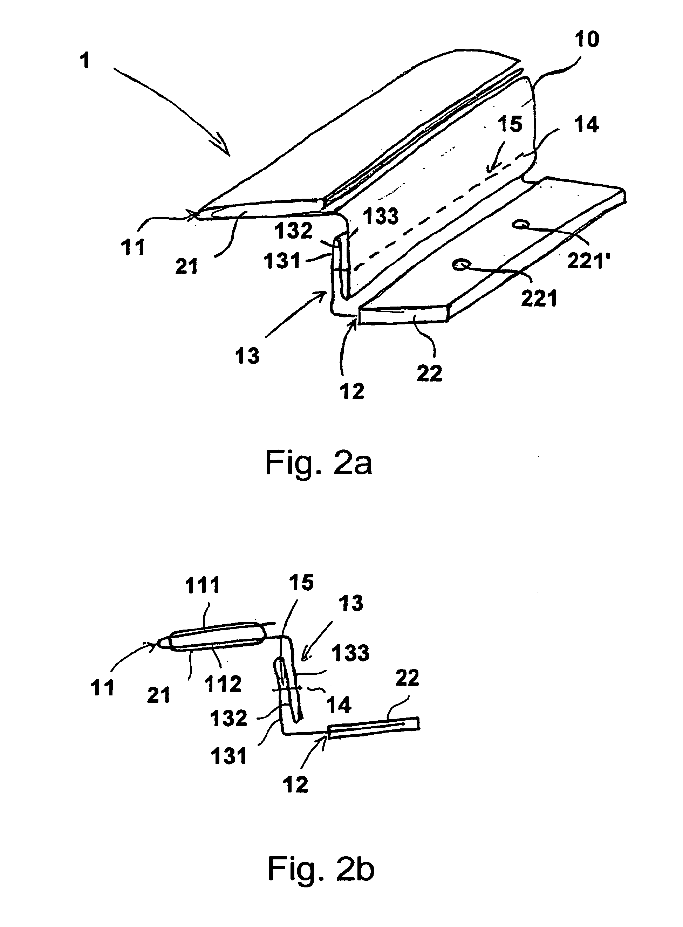

In der Fig. 2a wird eine Ausführungsform eines Haltemittels mit einer Verbindung genauer beschrieben. Das Haltemittel 1 weist ein erstes Halteelement in Form des Gewebes 10 auf, welches einen ersten Endabschnitt 11 und einen zweiten Endabschnitt 12 besitzt. Zudem besitzt es einen zwischen dem ersten und dem zweiten Endabschnitt angeordneten Abschnitt 13, wobei der Abschnitt 13 drei sich überlappende Teilabschnitte 131, 132, 133 aufweist. Die drei sich überlappenden Teilabschnitte sind mit einem zweiten Halteelement 14 miteinander verbunden. Die Verbindung 15 ist angedeutet.

Der erste Endabschnitt 11 ist "U"- oder "J"-förmig um eine erste Platte 21 angeordnet, wobei die erste Platte 21 und damit der mit ihr verbundene erste Endabschnitt 11 des ersten Halteelements des Haltemittels 1 mit einer Airbagklappe verbunden werden können. Der zweite Endabschnitt 12 befindet sich in einer zweiten Platte 22, wobei die zweite Platte 22 zwei Bohrungen 221, 221' aufweist, über welche es im Schusskanal oder am Träger einer Airbaganordnung befestigbar ist.

Das dargestellte Gewebe 10 besteht aus einer Mischung aus Polyester- und Aramidfasern. Die erste Platte 21 und die zweite Platte 22 bestehen aus einem faserverstärkten Polypropylen, wobei die Verstärkungsfasern des Polypropylens Glasfasern sind. Alternativ zum Polyester können auch Polyamid oder Polyprophylen eingesetzt werden.

Das zweite Halteelement 14 ist in der Fig. 2a ein Faden, welcher jeweils durch die drei Teilabschnitte 131, 132, 133 hindurchgezogen wird und so diese miteinander vernäht, wobei die Naht die Verbindung 15 bildet. Das hier verwendete zweite Halteelement weist eine Zugfestigkeit auf, die sehr viel geringer ist als die Zugfestigkeit des Gewebes 10. Dies führt dazu, dass im initialen Moment, in welchem ein Airbag gegen eine Airbagklappe drückt, die Zugfestigkeit des zweiten Halteelements 14 zwar groß genug ist, um nicht zu reißen, jedoch nachdem die Rotation der Airbagklappe eingeleitet ist, der Zug zu groß wird und das zweite Halteelement reißt, wodurch die Verbindung 15 gelöst wird und der Abschnitt 13 mit seiner gesamten Länge zur Verfügung steht.

In Fig. 2b ist das Haltemittel 1 der Fig. 2a nochmals in einer anderen Perspektive dargestellt. Der hier gezeigte Schnitt I durch die Fig. 2a offenbart, dass der erste Endabschnitt 11 des ersten Halteelements des Haltemittels 1 zwei Endteilabschnitte 111, 112 aufweist, welche jeweils die Schenkel des "J" bzw. "U" bilden. Die beiden Schenkel sind dabei zu Teilen in die erste Platte 21 eingespritzt, jedoch voneinander beabstandet. Lediglich in x-Richtung außerhalb der ersten Platte 21 befinden sich Enden, welche nicht in die Platte eingespritzt sind. Diese Enden dienen dazu, dass bei der Produktion des Haltemittels auf einfache Weise überprüft werden kann, ob der erste Endabschnitt 11 auch tatsächlich die gesamte in x-Richtung gesehene Länge der ersten Platte 21 durchläuft. Alternativ dazu kann die links der Platte 21 liegende Schlaufe sich in der Platte 21 befinden.

Weiterhin ist zu sehen, dass der zweite Endabschnitt 12 sich zu Teilen innerhalb der zweiten Platte 22 befindet. Es ist ebenfalls in diese eingespritzt. Über die später in die Bohrungen 221, 221' einzubringenden Schrauben wird ebenfalls der in der zweiten Platte 22 befindliche zweite Endabschnitt 12 durchdrungen, so dass auch dieses stabil in der zweiten Platte 22 gehalten wird.

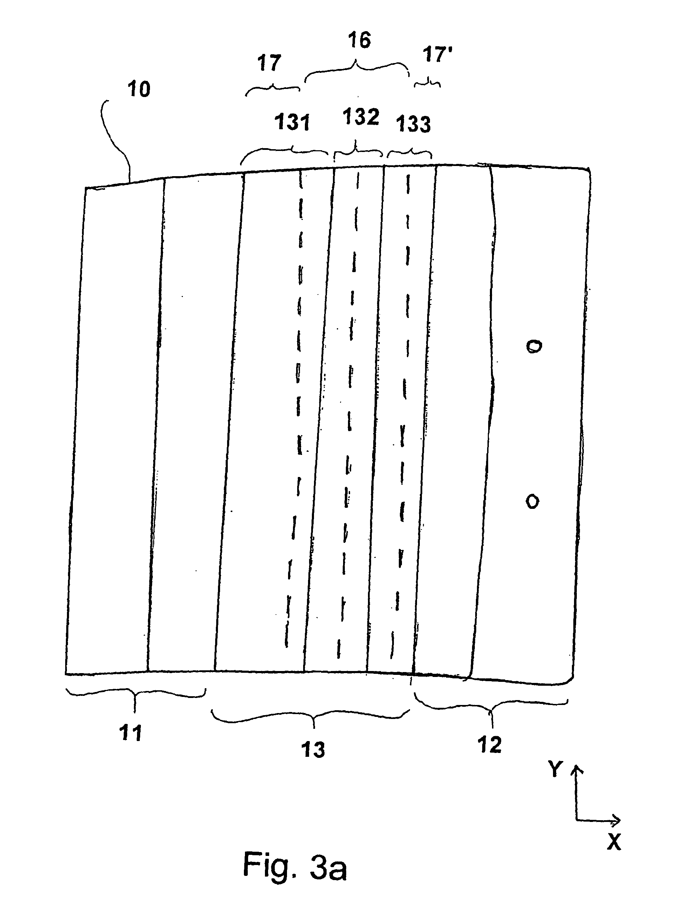

In der Fig. 3a ist das das erste Haltelement in Form des Gewebes 10 des Haltemittels 1 genauer dargestellt. Selbstverständlich kann das erste Haltelement auch eine Folie oder ein anderes flächiges Material sein. An dieser Stelle sei erwähnt, dass das Gewebe 10 für sich genommen bereits ein Haltemittel bildet. Dabei wird der erste Endabschnitt 11 direkt an einer Airbagklappe befestigt, der zweite Endabschnitt 12 direkt am Träger oder im Schusskanal befestigt und das zweite Halteelement 14 im Abschnitt 13 derart aufgebracht, dass die Verbindung 15 hergestellt ist.

Das Gewebe 10 weist in der y-Richtung eine Länge auf, welche im Wesentlichen der Breite einer Airbagklappe entspricht. Es ist jedoch auch denkbar, über die Breite der Airbagklappe verteilt mehrere, jedoch schmalere Gewebe 10 bzw. Haltemittel 1 anzubringen. Die Länge in x-Richtung ist dabei so gewählt, dass der Abschnitt 13 im Bereich zwischen 5 und 20 cm, besonders vorzugsweise zwischen 6 und 14 cm liegt. Die Breite in y-Richtung ist vorzugsweise zwischen 20 und 80 cm, besonders vorzugsweise zwischen 25 und 40 cm. Das Gewebe 10 ist im entfalteten Zustand dargestellt, d. h. der Ort der Verbindung 15 ist lediglich angedeutet, jedoch aufgetrennt. Die mittels der Verbindung 15 erreichte Kürzung der Überlänge des Abschnitts 13 wird durch den gekürzten Bereich 16 angedeutet. Dies bedeutet, dass die effektive Anfangsüberlänge, d. h. beim Auslösen des Airbags, bevor dieser auf die Airbagklappe trifft, im Wesentlichen die Summe der Abschnitte 17 und 17' ist. Diese wird nach der Lösung der Verbindung 15 zur überlänge des gesamten Abschnitts 13 verlängert.

Anhand der Fign. 2a, 2b und 3a soll noch erläutert werden, warum drei sich überlappende Teilabschnitte 131, 132, 133 vorteilhaft sind. Eine derartige Überlappung hat zur Folge, dass die Verbindung 15 im Wesentlichen an jeder Stelle der Teilabschnitte aufgebracht werden kann und in jedem Falle, vorausgesetzt, dass die Verbindung 15 alle drei Teilabschnitte miteinander verbindet, eine erfolgreiche effektive Kürzung des Abschnitts 13 zur Summe der Abschnitte 17 und 17' vorgenommen werden kann. Ein leichtes Verschieben der Verbindung 15 in x-Richtung verändert den verkürzten Bereich nicht. Von daher ist dieser gleich bleibend und lediglich von der Art der Anordnung der überlappenden Teilbereiche abhängig.

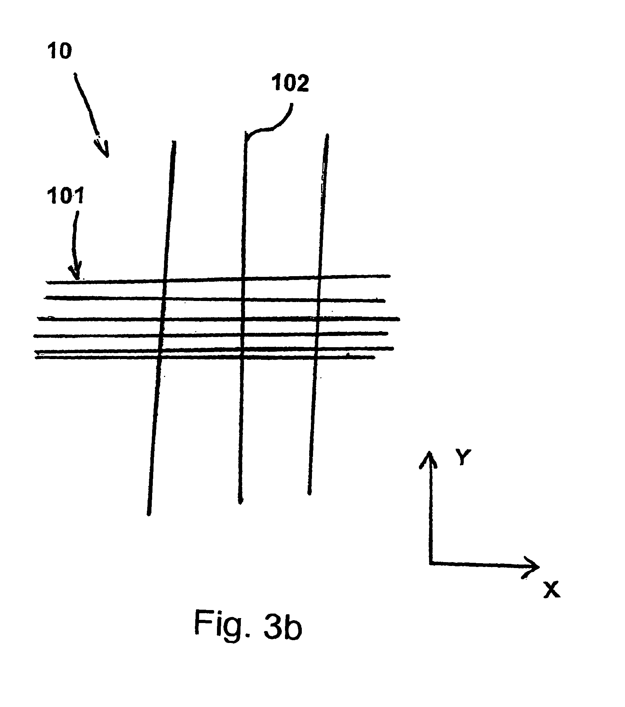

In der Fig. 3b ist das Innenleben des Gewebes 10 dargestellt, wobei in x-Richtung Aramidfasern 101 verlaufen, welche eine höhere Dichte aufweisen als die Fasern 102, welche in y-Richtung verlaufen. Dies erhöht insbesondere die Zugfestigkeit in x-Richtung, welche beim Einbau des Haltemittels 1 bzw. des Gewebes 10 in eine Airbaganordnung für das Haltemittel die entscheidende Zugrichtung ist.

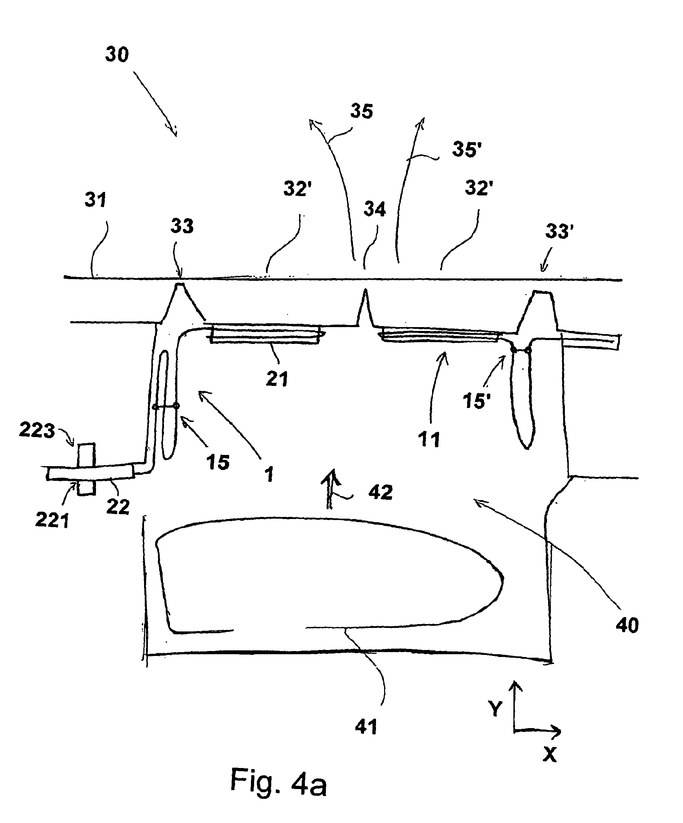

Anhand der Fign. 4a-d soll die Wirkungsweise und Anordnung des Haltemittels in einer Airbaganordnung erläutert werden. Die Airbaganordnung 30 weist einen Träger 31 und zwei Airbagklappen 32, 32' auf, wobei die Airbagklappen 32, 32' mit dem Träger 31 über geschwächte Verbindungsstellen 33 bzw. 33' verbunden sind. Dabei können die geschwächten Verbindungsstellen 33, 33' eine Scharnierwirkung haben, sie können jedoch auch beim Auslösen eines Airbags aufplatzen, so dass keine Verbindung - außer den Haltemitteln 1, 1' zwischen dem Träger 31 und den Airbagklappen 32, 32' mehr existiert. Zwischen den Airbagklappe 32, 32' ist eine Schwäche erkennbar, durch welche die Aufreißkante 34 gebildet wird. In y-Richtung unterhalb der Airbagklappen 32, 32' liegt der Schusskanal 40 mit dem darin befindlichen Airbag 41. Beim Auslösen des Airbags 41 wird dieser in Richtung 42 gepresst, was dazu führt, dass dieser auf die Airbagklappen 32, 32' drückt und eine Rotation derselbigen in den Richtungen 35, 35' bewirkt.

Sowohl die Airbagklappe 32 als auch die Airbagklappe 32' sind mit einem Haltemittel 1 bzw. 1' verbunden. Das Haltemittel 1 ist im Schusskanal 40 angeordnet, wobei es über eine durch die Bohrung 221 gesteckte Schraube 223 mit diesem fest verbunden ist. Das Haltemittel 1' ist in den Träger 31 gespritzt.

Das Haltemittel 1 weist eine Verbindung 15 auf, welche drei überlappende Teilabschnitte miteinander verbindet. Aus dieser Ansicht wird klar, dass die Verbindung 15 in der y-Richtung verschiebbar ist, ohne die effektive Anfangsüberlänge des Haltemittels 1 zu verändern. Das Haltemittel 1' weist lediglich zwei sich überlappende Teilabschnitte 131', 132' auf, wobei die Verbindung 15' derart angeordnet ist, dass sie eine maximale Verkürzung bewirkt. Bei einer Verschiebung der Verbindung 15' in y-Richtung nach unten wird der Grad der Verkürzung geringer, so dass es bei lediglich zwei sich gegenüberliegenden Teilabschnitten auch auf die Position der Verbindung 15' ankommt. Die Verbindung 15 wird wie in den Fign. 2a, 2b gezeigt mittels eines Garns bzw. einer Faser hergestellt und bildet eine Naht. Die Verbindung 15' wird durch ein zweites Halteelement 14' gebildet, wobei das zweite Halteelement 14' ein Klebstoff ist.

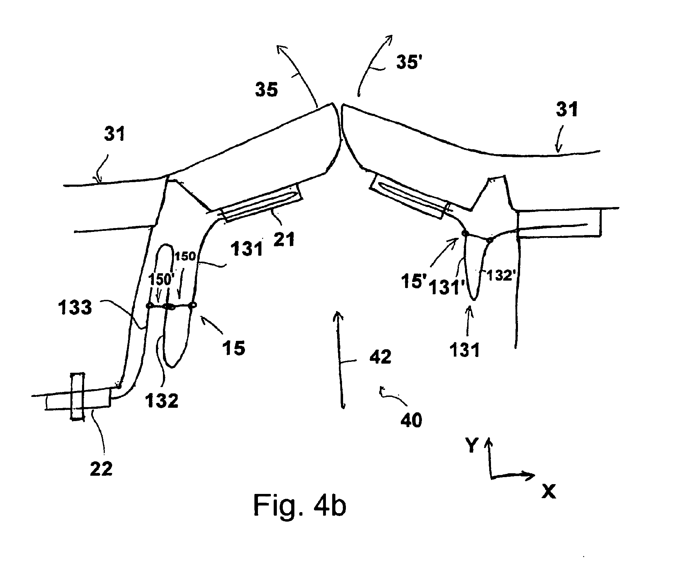

In der Fig. 4a ist die Airbaganordnung 30 geschlossen. Bei der Auslösung des Airbags 41 drückt dieser in der Richtung 42 nach oben. Beim Auftreffen auf die der Sichtseite abgewandte Seite der Airbagklappen 32 bzw. 32' drückt dieser zunächst gleichmäßig auf die Airbagklappen. Da sich jedoch in den Verbindungsbereichen 33 bzw. 33' die Haltemittel 1 bzw. 1' befinden und diese gegen einen Hub der Airbagklappen 32 bzw. 32' Widerstand leisten, kommt es zu einer initialen Rotation der Airbagklappen 32 bzw. 32' in den Richtungen 35 bzw. 35'. Dies führt dazu, wie in Fig. 4b gezeigt, dass die Aufreißkante 34 aufreißt. Die Aufreißkante 34 erstreckt sich hierbei in z-Richtung. Zum Zeitpunkt des Aufreißens der Aufreißkante 34 sind die eingezeichneten Verbindungen 15 bzw. 15' noch intakt.

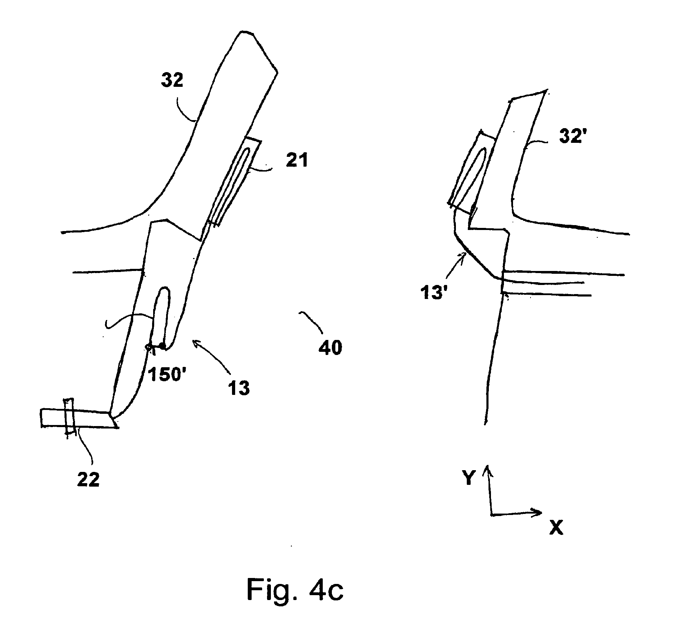

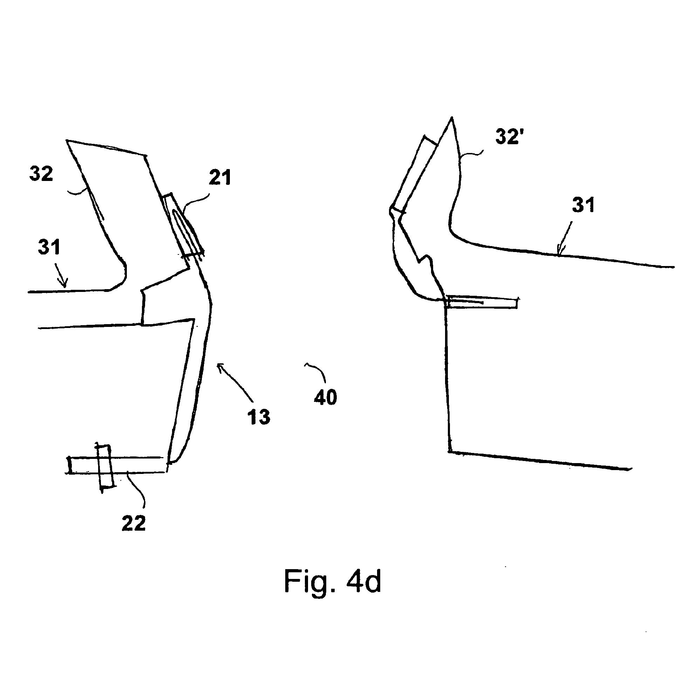

Bei einem weiteren Nachdrücken des Airbags lösen sich die Verbindungen 15 bzw. 15' und ermöglichen nun das weitere Aufschwingen der Airbagklappen 32 bzw. 32'. Dabei kann, wie dargestellt, die Verbindung 15 aus zwei Unterverbindungen 150, 150' aufgebaut sein, so dass zunächst die Verbindung 150 zwischen zwei sich überlappenden Teilbereichen reißt. Dies ist in Fig. 4c dargestellt. Zu einem späteren Zeitpunkt reißt dann die zweite Teilverbindung 150', wie in Fig. 4d dargestellt. Jedoch ist es selbstverständlich auch möglich, dass die Verbindung 15 als eine durchgehende, alle drei Teilbereiche verbindende Verbindung 15 ausgebildet ist, wobei diese Verbindung reißt und alle drei Teilbereiche freigibt.

Die hier gezeigten Haltemittel erfüllen alle gleichzeitig eine Scharnierfunktion. Es ist jedoch auch denkbar, die Haltemittel mit "V"-förmigen Geweben 10 auszubilden, wobei diese entlang der Seitenkanten, d. h. in den Fign. 4a bis 4d in x-Riclitung verlaufenden Kanten der Airbagklappen angeordnet sind, wobei die Verbindung 15 dann von zunehmender zu abnehmender x-Richtung einen graduellen Anstieg der Zugfestigkeit aufweist, so dass zunächst der linke Bereich der Airbagklappe 32 aufreißen würde, da hier der Widerstand am geringsten ist.

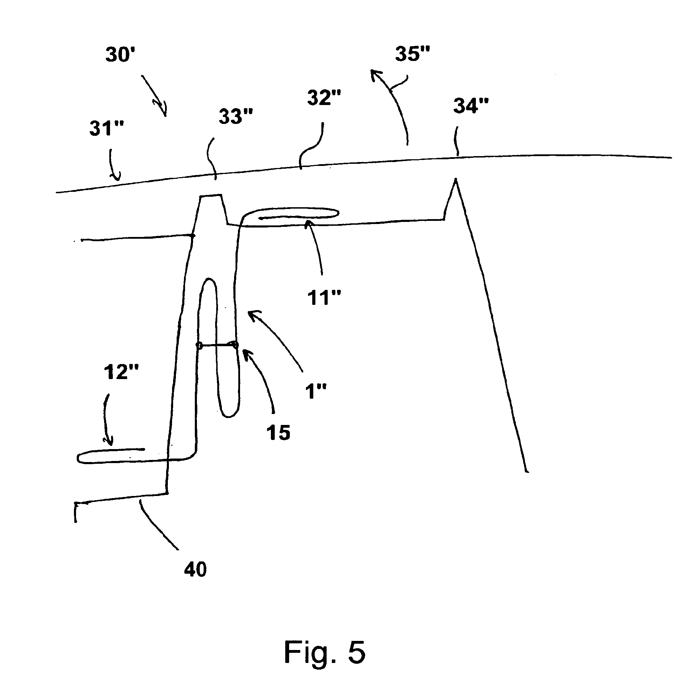

In der Fig. 5 ist eine alternative Ausführungsform des Haltemittels dargestellt. Gezeigt ist eine Airbaganordnung 30' mit einer Airbagklappe 32'' sowie einem Träger 31'', wobei die Airbagklappe 32'' über die Verbindungsstelle 33'' mit dem Träger 31'' verbunden ist. Des Weiteren ist eine Aufreißkante 34'' zu sehen, entlang welcher sich die Airbagklappe öffnet und anschließend in der Richtung 35'' rotiert. Das dargestellte Haltemittel 1" weist einen ersten Endabschnitt 11" und einen zweiten Endabschnitt 12'' auf, wobei diese jeweils zwei Endteilabschnitte aufweisen, welche "U"-förmig voneinander beabstandet sich gegenüberliegen. Dabei befindet sich der erste Endabschnitt 11" in der Airbagklappe 32" und der zweite Endabschnitt 12'' in der Umrandung des Schusskanals 40. Durch die in Fig. 5 gezeigte Anordnung des Haltemittels 1'' kann auf eine erste und zweite Platte verzichtet werden. Aufgrund der "U"-förmigen bzw. "J"-förmigen Umschlagung des ersten bzw. zweiten Endabschnitts 11", 12" wird die Zugfestigkeit zwischen dem Haltemittel 1'' und der Airbagklappe 32" bzw. dem Schusskanal 40 verbessert, so dass das Haltemittel 1'' nicht aus diesen herausgezogen werden kann.

## Patentansprüche

1. Haltemittel (H; H'; H"; 1, 1') für eine Airbaganordnung mit einem ersten Halteelement, welches über einen ersten Endabschnitt (11) mit mindestens einer Airbagklappe (32; 32') und über einen zweiten Endabschnitt (12) mit einem Schusskanal (40) oder über den ersten Endabschnitt mit mindestens einer Airbagklappe (32; 32') und über den zweiten Endabschnitt mit einem die Airbagklappe umgebenden Träger (31) verbindbar ist und mindestens einen zwischen dem ersten und dem zweiten Endabschnitt (12) angeordneten Abschnitt (13) aufweist, und am ersten Endabschnitt (11) eine mit einer Airbagklappe (32, 32') verbindbare erste Platte (21) und/oder am zweiten Endabschnitt (12) eine mit einem Träger (31) oder einem Schusskanal (40) verbindbare zweite Platte (22) befestigt ist,
**dadurch gekennzeichnet, dass** der erste Endabschnitt (11) mindestens zwei sich überlappende miteinander verbundene Endteilabschnitte (111,112), welche sich gegenüberliegend und voneinander beabstandet mit der ersten Platte (21) verbunden sind, aufweist und/oder der zweite Endabschnitt (12) mindestens zwei sich überlappende miteinander verbundene Endteilabschnitte, welche sich gegenüberliegend und voneinander beabstandet mit der zweiten Platte (21) verbunden sind, aufweist.

2. Haltemittel nach Anspruch 1, **dadurch gekennzeichnet, dass** die Endteilabschnitte (111,112) des ersten Endabschnitts (11) mit der ersten Platte (21) und/oder die Endteilabschnitte des zweiten Endabschnitts (12) mit der zweiten Platte (22) zumindest teilweise stoffschlüssig verbunden sind.

3. Haltemittel nach einem der Ansprüche 1 oder 2, **dadurch gekennzeichnet, dass** die die Endteilabschnitte (111,112) des ersten Endabschnitts (11) in die erste Platte (21) und/oder die Endteilabschnitte des zweiten Endabschnitts (12) in die zweite Platte (22) zumindest teilweise eingelassen sind.

4. Haltemittel nach einem der vorhergehenden Ansprüche, **dadurch gekennzeichnet, dass** die mindestens zwei sich überlappenden Endteilabschnitte (111,112) des ersten Endabschnitts (12) eine einfache Schlaufe mit einem Umkehrpunkt (113) bilden, wobei der Umkehrpunkt (113) nicht mit der ersten Platte (21) verbunden ist, und/oder die mindestens zwei sich überlappenden Endteilabschnitte des zweiten Endabschnitts (12) eine einfache Schlaufe mit einem Umkehrpunkt bilden, wobei der Umkehrpunkt nicht mit der zweiten Platte (22) verbunden ist.

5. Haltemittel nach einem der vorhergehenden Ansprüche, **dadurch gekennzeichnet, dass** der erste Endabschnitt (11) mit der ersten Platte (21) und/oder der zweite Endabschnitt (12) mit der zweiten Platte (22) verklebt oder verschweißt oder verschraubt oder eingespritzt ist.

6. Haltemittel einem der vorhergehenden Ansprüche, **dadurch gekennzeichnet, dass** das erste Halteelement ein Gewebe (10) oder eine Folie aus Polyester und/oder faserverstärktem Polyester und/oder Aramid aufweist.

7. Haltemittel nach einem der vorhergehenden Ansprüche, **dadurch gekennzeichnet, dass** die erste und/oder zweite Platte (21, 22) Polypropylen, vorzugsweise faserverstärktes Polypropylen, aufweist.

8. Haltemittel nach einem der vorhergehenden Ansprüche, **dadurch gekennzeichnet, dass** die Endteilabschnitte (111,112) des ersten und/oder zweiten Endabschnitt (11,12) jeweils eine Länge zwischen 0,5 cm bis 15 cm, vorzugsweise zwischen 1,5 cm und 5 cm, aufweisen.

9. Haltemittel nach einem der vorhergehenden Ansprüche, **dadurch gekennzeichnet, dass** der Abschnitt mindestens zwei sich überlappenden Teilabschnitte (131, 132, 133; 131', 132') aufweist und mindestens ein zweites Halteelement (14) eine Verbindung (15) zwischen den mindestens zwei Teilabschnitten (131, 132, 133; 131', 132') herstellt, wobei das zweite Halteelement (14) eine geringere Zugfestigkeit als das erste Halteelement aufweist.

10. Haltemittel nach Anspruch 9, **dadurch gekennzeichnet, dass** die Verbindung (15) durch verkleben, verschweißen oder vernähen hergestellt ist.

11. Airbaganordnung (30) mit mindestens einer einen Schusskanal (40) überdeckenden Airbagklappe (32; 32') mit einer einem Fahrzeuginnenraum zugewandten Sichtseite und einem Haltemittel (14) nach einem der vorhergehenden Ansprüche, wobei der erste Endabschnitt (11) mit der mindestens einen Airbagklappe (32; 32') und der zweite Endabschnitt (12) mit dem Schusskanal (40) oder einem die Airbagklappe (32; 32') umgebenden Träger (31) entlang einer Seite der mindestens einen Airbagklappe (32; 32') scharnierartig verbunden ist.

## Claims

1. Retaining means (H; H'; H''; 1, 1') for an airbag arrangement having a first retaining element which can be connected via a first end portion (11) to at least one airbag flap (32; 32') and, via a second end portion (12), to a firing channel (40) or, via the first end portion, to at least one airbag flap (32; 32') and, via the second end portion, to a support (31) surrounding the airbag flap and has at least one portion (13) disposed between the first and the second end portion (12), and, on the first end portion (11), a first plate (21), which can be connected to an airbag flap (32, 32') and/or on the second end portion (12), a second plate (22), which can be connected to a support (31) or a firing channel (40) is mounted,
***characterised in that***
the first end portion (11) has at least two overlapping end partial portions (111, 112) which are connected to each other and are connected to the first plate (21), situated opposite each other and at a spacing from each other, and/or the second end portion (12) has at least two overlapping end partial portions which are connected to each other and are connected to the second plate (21), situated opposite each other and at a spacing from each other.

2. Retaining means according to claim 1, **characterised in that** the end partial portions (111, 112) of the first end portion (11) are connected to the first plate (21) and/or the end partial portions of the second end portion (12) to the second plate (22) at least partially in an integral manner.

3. Retaining means according to one of the claims 1 or 2, **characterised in that** the end partial portions (111, 112) of the first end portion (11) are recessed at least partially into the first plate (21) and/or the end partial portions of the second end portion (12) into the second plate (22).

4. Retaining means according to one of the preceding claims, **characterised in that** the at least two overlapping end partial portions (111, 112) of the first end portion (12) form a simple loop with a turning point (113), the turning point (113) not being connected to the first plate (21), and/or the at least two overlapping end partial portions of the second end portion (12) forming a single loop with a turning point, the turning point not being connected to the second plate (22).

5. Retaining means according to one of the preceding claims, **characterised in that** the first end portion (11) is glued or welded or screwed or sprayed in to the first plate (21) and/or the second end portion (12) to the second plate (22).

6. Retaining means according to one of the preceding claims, **characterised in that** the first retaining element has a woven material (10) or a film made of polyester and/or fibre-reinforced polyester and/or aramide.

7. Retaining means according to one of the preceding claims, **characterised in that** the first and/or second plate (21, 22) has polypropylene, preferably fibre-reinforced polypropylene.

8. Retaining means according to one of the preceding claims, **characterised in that** the end partial portions (111, 112) of the first and/or of the second end portion (11, 12) respectively have a length between 0.5 cm to 15 cm, preferably between 1.5 cm and 5 cm.

9. Retaining means according to one of the preceding claims, **characterised in that** the portion has at least two overlapping partial portions (131, 132, 133; 131', 132') and at least one second retaining element (14) produces a connection (15) between the at least two partial portions (131, 132, 133; 131', 132'), the second retaining element (14) having a lower tensile strength than the first retaining element.

10. Retaining means according to claim 9, **characterised in that** the connection (15) is produced by glueing, welding or sewing.

11. Airbag arrangement (30) having at least one airbag flap (32; 32') covering a firing channel (40), having a visible side orientated towards a vehicle interior and a retaining means (14) according to one of the preceding claims, the first end portion (11) being connected like a hinge to the at least one airbag flap (32; 32') and the second end portion (12) being connected to the firing channel (40) or to a support (31) surrounding the airbag flap (32; 32') along one side of the at least one airbag flap (32; 32').

## Revendications

1. Eléments de retenue (H; H'; H''; 1; 1') pour un agencement de coussin de sécurité gonflable avec un premier élément de retenue qui peut être relié par une première extrémité (11) à au moins un clapet de coussin gonflable de sécurité (32; 32') et par une deuxième extrémité (12) à un canal de tir (40), ou bien qui peut être relié par sa première extrémité (11) à au moins un clapet de coussin gonflable de sécurité (32; 32') et par sa deuxième extrémité à un support (31) enveloppant le clapet de coussin gonflable de sécurité, et qui présente au moins une section (13) agencée entre la première et la deuxième extrémité (12), et qui voit fixée à sa première extrémité (11) une première plaque (21) pouvant être reliée à un clapet de coussin gonflable de sécurité (32; 32'), et / ou à sa deuxième extrémité (12) une deuxième plaque (22) pouvant être reliée à un support (31) ou à un canal de tir (40),
**caractérisés en ce que**
la première extrémité (11) présente au moins deux sections d'extrémités (111, 112) se chevauchant et liées l'une à l'autre, qui, placées l'une face à l'autre et écartées l'une de l'autre, sont liées à la première plaque (21)
et / ou **en ce que** la deuxième extrémité (12) présente au moins deux sections d'extrémité se chevauchant et liées l'une à l'autre, qui, placées l'une face à l'autre et écartées l'une de l'autre, sont liées à la deuxième plaque (22).

2. Eléments de retenue selon la revendication 1, **caractérisés en ce que** les sections d'extrémité (111, 112) de la première extrémité (11) sont liées à la première plaque (21) et / ou **en ce que** les sections d'extrémité de la deuxième extrémité (12) soit liée au moins partiellement par fusion à la deuxième plaque (22).

3. Eléments de retenue selon l'une des revendications 1 ou 2, **caractérisés en ce que** les sections d'extrémité (111, 112) de la première extrémité (11) soient insérées au moins partiellement dans la première plaque (21) et / ou que les sections d'extrémité de la deuxième extrémité (12) soient insérées au moins partiellement dans la deuxième plaque (22).

4. Eléments de retenue selon l'une des revendications précédentes, **caractérisés en ce que** les sections d'extrémité (111, 112) de la première extrémité (12), se chevauchant et au nombre d'au moins deux, forment une boucle simple avec un point de rebroussement (113), où le point de rebroussement (113) n'est pas lié à la première plaque (21), et / ou les sections d'extrémité de la deuxième extrémité (12), se chevauchant et au nombre d'au moins deux, forment une boucle simple avec un point de rebroussement, où le point de rebroussement n'est pas lié à la deuxième plaque (22).

5. Eléments de retenue selon l'une des revendications précédentes, **caractérisés en ce que** la première extrémité (11) est collée, soudée, vissée ou fixée par injection à la première plaque (21) et / ou que la deuxième extrémité (12) est collée, soudée, vissée ou fixée par injection à la deuxième plaque (22).

6. Eléments de retenue selon l'une des revendications précédentes, **caractérisés en ce que** le premier élément de retenue comporte un tissu (10) ou bien un film de polyester et / ou de polyester renforcé par des fibres et / ou d'aramide.

7. Eléments de retenue selon l'une des revendications précédentes, **caractérisés en ce que** la première et / ou la deuxième plaque (21, 22) comporte du polypropylène, de préférence du polypropylène renforcé par des fibres.

8. Eléments de retenue selon l'une des revendications précédentes, **caractérisés en ce que** les sections d'extrémité (111, 112) de la première extrémité et/ou de la deuxième extrémité (11, 12) ont chacune une longueur comprise entre 0,5 cm et 15 cm, de préférence comprise entre 1,5 cm et 5 cm.

9. Eléments de retenue selon l'une des revendications précédentes, **caractérisés en ce que** la section comporte au moins deux parties se chevauchant (131, 132, 133 ; 131', 132') et **en ce qu'**au moins un deuxième élément de retenue (14) constitue une liaison (15) entre les parties de la section (131, 132, 133 ; 131', 132'), au nombre d'au moins deux, où le deuxième élément de retenue (14) présente une résistance à la traction moins élevée que le premier élément de retenue.

10. Eléments de retenue selon la revendication 9, **caractérisés en ce que** la liaison (15) est obtenue par collage, soudure, ou bien couture.

11. Agencement de coussin de sécurité gonflable (30) avec au moins un clapet de coussin gonflable de sécurité (32 ; 32') recouvrant un canal de tir (40) avec une face visible tournée vers un intérieur de véhicule et avec un élément de retenue (14) selon l'une des revendications précédentes, où la première extrémité (11) est liée de façon articulée au clapet de coussin gonflable de sécurité (32 ; 32') au nombre d'au moins un, et où la deuxième extrémité (12) est liée de façon articulée au canal de tir (40) ou bien à un support (31) entourant le clapet de coussin gonflable de sécurité (32 ; 32') le long d'un côté du clapet de coussin gonflable de sécurité (32 ; 32') au nombre d'au moins un.
